# EUROPEAN PATENT SPECIFICATION

(11) **EP 4 347 924 B1**
(45) Date of publication and mention of the grant of the patent: **04.12.2024**
(21) Application number: 22751967.5
(22) Date of filing: 06.07.2022
(51) Int. Cl.: C25B 1/042, C25B 1/23, H01M 4/88, H01M 4/90, H01M 8/04007, H01M 8/0637, H01M 8/1253

(54) **SOLID OXIDE ELECTROLYTIC CELLS USING ZEOLITE-TEMPLATED CARBON (ZTC) AS ELECTROCATALYST**
FESTOXID-ELEKTROLYSEZELLEN MIT ZEOLITHTEMPLATIERTEM KOHLENSTOFF (ZTC) ALS ELEKTROKATALYSATOR
CELLULES ÉLECTROLYTIQUES À OXYDE SOLIDE UTILISANT DU CARBONE À MATRICE DE ZÉOLITE (ZTC) COMME ÉLECTROCATALYSEUR

(30) Priority: 14.07.2021 GR 20210100471; 08.10.2021 US 202117450406
(43) Date of publication of application: 10.04.2024
(73) Proprietor: Saudi Arabian Oil Company, Dhahran 31311 (SA)
(72) Inventor: HAMMAD, Ahmad D., Dhahran, 31311 (SA); AMR, Issam T., Dhahran, 31311 (SA); WANG, Yuguo, Dhahran, 31311 (SA); LITHOXOOS, Georgios, Dhahran, 31311 (SA); OTHMAN, Rashid M., Dhahran, 31311 (SA)
(74) Representative: Fish & Richardson P.C.
(86) International application number: PCT/US2022/073481
(87) International publication number: WO 2023/288174

(56) References cited:
- EP-A1- 2 940 773
- WO-A1-2016/096806
- CN-A- 107 868 962
- YANG H N ET AL: "Effect of functionalization for carbon molecular sieve (CMS) synthesized using zeolite template on the incorporation of Pt nanoparticle and performance of the electrodes in PEMFC", MICROPOROUS AND MESOPOROUS MATERIALS, ELSEVIER, AMSTERDAM ,NL, vol. 152, 21 November 2011 (2011-11-21), pages 148 - 156, XP028443342, ISSN: 1387-1811, [retrieved on 20111202], DOI: 10.1016/J.MICROMESO.2011.11.042

## Description

This patent claims priority to Greek Application No. 20210100471, filed July 14, 2021, and U.S. Application No. 17/450,406, filed October 8, 2021.

### Technical Field

The present disclosure is directed to enhancing the performance of solid oxide electrolytic cells by using zeolite-templated carbon (ZTC) as electrocatalyst.

### Background

Electrolytic cells are an alternative energy technology that generates hydrogen from water for storage of energy. The electrolytic cells may use power from renewable sources, such as wind turbines, solar cells, or hydroelectric power. Alternatively, the electrolytic cells may use power from nuclear reactors, or power generated from waste energy at chemical processing facilities or refineries. Each individual electrolytic cell contains three primary components: two electrodes (anode and cathode) and a conductive electrolyte.

Solid oxide electrolytic cell (SOEC) is a type of electrolyzer that may be used to electrolyze steam to form hydrogen and oxygen. Further, an SOEC may be used to sequester CO₂ while generating other products. For example, an SOEC may take a feed stream of CO₂ and H₂O.

WO 2016/096806 describes a process for producing hydrogen in an electrolytic cell comprising a polymer electrolyte membrane, the process comprising contacting protons with a cathode comprising a hydrogen evolution catalyst comprising Co3O4 and a carbon material, wherein the carbon material is conductive or semi-conductive, and the process is carried out applying a potential equal to or higher than 1.8 V between the cathode and the anode.

Yang et al. (Micropor. Mesopor. Mat. 152, p. 148-156 (2012) describes the effect of functionalization for carbon molecular sieve synthesized using zeolite template on the incorporation of Pt nanoparticle and performance of the electrodes in polymer electrolyte fuel cells.

### Summary

An embodiment described herein provides a method for making a solid oxide electrolytic cell assembly (SOEC). The SOEC includes forming a functionalized zeolite templated carbon (ZTC). The functionalized ZTC is formed by forming a CaX zeolite, depositing carbon in the CaX zeolite using a chemical vapor deposition (CVD) process to form a carbon/zeolite composite, treating the carbon/zeolite composite with a solution including hydrofluoric acid to form a ZTC, and treating the ZTC to add catalyst sites. In the method, the functionalized ZTC is incorporated into electrodes by forming a mixture of the functionalized ZTC with a calcined solid oxide electrolyte, and calcining the mixture. The method includes forming an electrode assembly, forming the SO electrolytic cell assembly, and coupling the SO electrolytic cell assembly to a heat source.

Another embodiment provides a solid oxide electrolysis cell (SOEC). The SOEC includes an electrode assembly (EA). The EA includes an anode, a solid oxide electrolyte, and a cathode, wherein the anode, the cathode, or both includes functionalized zeolite templated carbon (ZTC). The SOEC includes a housing that includes an inlet for a mixture of steam and carbon dioxide, an outlet for a mixture of hydrogen and carbon monoxide, an outlet for oxygen, and a heating system to provide heat to the SOEC. The SOEC includes a power line coupled to the cathode to provide current to the SO electrolytic cell from an external power supply and a return line from the anode coupled to the external power supply.

### Brief Description of Drawings

Figure 1 is a schematic drawing of an SO electrolytic cell using ZTC supported catalyst at the interfaces between the anode and the SO and between the SO and the cathode.
Figure 2 is a process flow diagram of a method for making a polymer electrode membrane electrolytic cell assembly.
Figure 3 is a plot comparing NH₃ TPD (temperature programmed desorption) profiles of CaX and commercial NaX.
Figure 4 is a schematic diagram of the synthesis of the zeolite templated carbon (ZTC)
Figure 5 is an XRD plot of the results for the different ZTCs formed.
Figure 6A is a plot of N₂ adsorption/desorption isotherms for the three different ZTCs.
Figure 6B is a plot of the pore size distribution of the ZTCs using an NLDFT algorithm.
Figure 7 is a plot of the N₂ adsorption-desorption isotherms of zeolite-carbon composite (without zeolite template removal) collected at the different steps of the synthesis process.
Figures 8A to 8C show the N₂ adsorption isotherms and XRD patterns for the representative samples in Table 3.
Figure 9 is a drawing of a ZTC impregnated with catalyst particles forming a functionalized ZTC.
Figure 10 is a schematic drawing of an electrode assemble with the functionalized ZTC incorporated into the interfaces between the SO and the anode and the cathode

### Detailed Description

Solid oxide electrolysis cells (SOEC) are generally operated at high temperatures, for example, about 700 °C to about 1100 °C. The high temperature CO₂ electrolysis provides a techniques for the storage of CO₂. Further, the formation of a syngas stream provides a feed stream for the production of other materials, such as synthetic hydrocarbon fuels. However, the high temperatures are problematic as it may cause degradation of materials and high corrosion rates. Further, as the electrolytic process is endothermic, higher temperatures require more energy to maintain.

In various embodiments, the techniques described herein provide anode and cathode electrodes formed as graded structured carbone-ceramic composites that include a zeolite-templated carbon (ZTC) as an electrocatalyst. Functionally graded materials (FGMs) may be characterized by the variation in composition and structure gradually over volume, resulting in corresponding changes in the properties of the material. The materials can be designed for specific function and applications. Various approaches based on the bulk (particulate processing), preform processing, layer processing and melt processing are used to fabricate the functionally graded materials. There are many areas of application for FGM. The concept is to make a composite material by varying the microstructure from one material to another material with a specific gradient. The electrocatalyst reduces a species on the cathode side and oxidizes species at the cathode. In SO electrolytic cells, an oxygen ion O²⁻ is diffused from to the anode side of this process by a solid electrolyte, as described herein, the use of alternative cathode materials such as composites made of a zeolite-templated carbon (ZTCs) with a solid electrolyte, e.g. which behave effectively as mixed conductors on macroscopic scale and the use of metal and metal oxide-containing ZTCs. These materials exhibit high ion conductivity and electrical, which increases the available area for CO₂ reduction and in high oxygen surface exchange coefficients.

A reduction of the operating temperature of solid oxide electrolysis cells to about 600 °C, or less, is desirable for material stability and long term operational stability. It requires the development of new generation of cathode electrodes with high electrocatalytic activity for CO₂ reduction.

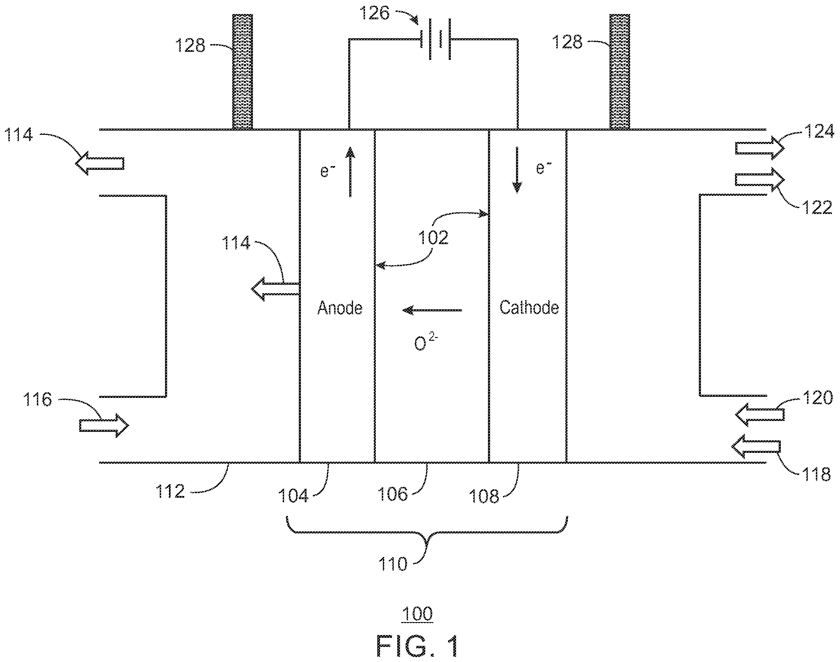

An electrocatalyst is able to participate in the electron transfer reaction and increase the reaction rate and hence the current at a potential as close as possible to the equilibrium potential. The ZTC electrocatalyst described herein may facilitate the electron transfer and increase the efficiency of the kinetics which may lower the operational temperature. SOECs can be used for steam electrolysis and for electrolyzing carbon dioxide to carbon monoxide and oxygen (CO₂ → CO + ½ O₂). The electrolysis of a CO₂/H₂O mixture is described with respect to Figure 1.

Figure 1 is a schematic drawing of a solid oxide electrolytic cell (SOEC) 100 using ZTC supported catalyst at the interfaces 102 between the anode 104 and the SO electrolyte 106 and between the SO electrolyte 106 and the cathode 108. In various embodiments, the SO electrolyte is yttria-stabilized zirconia (YSZ), CeO₂, or other types of oxygen ion conductors. In contrast to proton exchange membrane fuel cells which conduct positive hydrogen ions (protons) through a polymer electrolyte from the anode to the cathode, the SOEC uses a solid oxide (SO) electrolyte to conduct negative oxygen ions from the cathode to the anode. As used herein, the anode 104, SO electrolyte 106, and cathode 108, with the ZTC supported catalyst layers, forms an electrode assembly (EA) 110, which is supported in a housing 112.

The half reaction at the anode 104 is shown below.

2O²⁻ → O₂ + 4e⁻

The oxygen 114 formed at the anode 104 exits the housing 112 through an outlet. In some embodiments, a sweep gas stream 116 is used to sweep the oxygen 114 from the housing 112.

Another inlet in the housing 112 is used to provide carbon dioxide 118 and steam 120 to the cathode 108. The half-reactions at the cathode 108 are shown below:

H₂O + 2e⁻ → H₂ + O²⁻

CO₂ + 2e⁻ → CO + O²⁻

The hydrogen 122 and carbon monoxide 124 formed at the cathode 108 exit the housing 112 through an outlet. The electrons are provided by an external power source 126. The oxygen ions formed at the cathode by the reduction of the carbon dioxide 118 or the steam 120 are transported through the membrane to the anode, and forms the oxygen 114.

While the steam 120 may be used to maintain the SOEC 100 at operating temperature, in some embodiments, the housing includes a heating system 128 for adding heat, such as steam coils, hot gas feed, and the like. Although not shown, in some embodiments, the heating system 128 includes lines or coils in contact with the EA 110 to provide heat. If the SOEC 100 is used in reversible operation as an SO fuel cell (SOFC), heat generated during operation as a SOFC may be stored for use during electrolysis. For example, in an embodiment, the heat generated during operation as a fuel cell is stored in a reservoir as a molten salt, which is pumped through the SOEC 100 to provide heat during electrolysis.

The catalyst supported on the functionalized ZTC located at the interfaces 102, lowers the activation energy of the half-cell reactions. As the ZTC has a very high surface area, the catalyst may increase the efficiency, lowering the operation temperature.

In addition to generating hydrogen, the SOEC 100 can be used to provide CO₂ neutral synthetic hydrocarbon fuels and valuable substances. The SOE resulting CO, in combination with hydrogen, can be catalytically converted, through Fischer Tropsch reactions or methanation reactions, to synthetic fuels such as methanol, methane, and dimethyl ether (DME), for example, in the reaction below.

(2n+1)H₂ + nCO → CₙH₂ₙ₊₂ + nH₂O

High temperature electrolysis has the advantages of high conversion efficiency, which may be above 90%. The use of external heat sources, such as waste heat from industrial production or from natural sources, can be used to increase the efficiency.

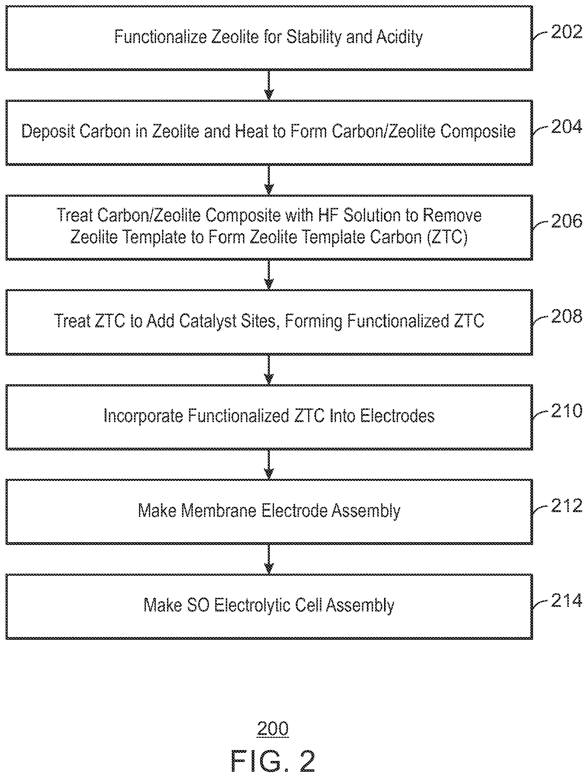

Figure 2 is a process flow diagram of a method 200 for making a polymer electrode membrane electrolytic cell. The method 200 begins at block 202 with the ion-exchanging of an NaX zeolite with Ca²⁺ ions to form a CaX zeolite. Although zeolite X is described in detail herein, other zeolites may be used in embodiments, including, for example, zeolite Y, or zeolite BAU, among others. The selection of the zeolite, and any treatments used, such as ion exchange, may be based on the temperature stability and pore size of the zeolite.

At block 204, carbon is deposited in the zeolite to form a carbon/zeolite composite. In various embodiments, a chemical vapor deposition (CVD) process to deposit carbon in the zeolite by exposing the zeolite to an organic precursor gas at an elevated temperature, which deposits carbon in the pores of the zeolite. After deposition, the zeolite containing the deposited carbon is heated to carbonize the deposited carbon, forming a carbon/zeolite composite. In embodiments described herein, carbon is deposited in CaX zeolite by exposing the CaX zeolite to propylene, ethanol, or acetylene in mixtures with helium. In various embodiments, temperatures for the deposition and heat treatment range are between about 820 K and 1125 K. In some embodiments, deposition temperatures are between about 820 K and about 975 K. In one embodiment, the deposition temperature is about 823 K. In another embodiment, the deposition temperature is about 873 K.

At block 206 the carbon/zeolite composite is treated with an aqueous acid solution that includes HF to remove the CaX template forming zeolite template carbon (ZTC). In various embodiments, the aqueous acid solution includes HF and HCl, in approximately equal amounts. In various embodiments, the aqueous acid solution includes about 2 wt. % of each of HF and HCl, about 3 wt. % of each of HF and HCl, or about 4 wt. % of each of HF and HCl.

At block 208, the ZTC is treated to add catalyst sites, forming functionalized ZTC. To serve as electrode or electro catalyst, an oxide, a metal or a metal oxide is added to the ZTC. This can be performed by a number of techniques known in the art, including wet impregnation, sputtering, sputter-deposition, doping, chemical functionalization, thermal coating or electrochemical coating, among others. In some embodiments, this is performed by an incipient wetness technique.

Incipient wetness impregnation (IW or IWI), also called capillary impregnation or dry impregnation, is a commonly used technique for the synthesis of heterogeneous catalysts. Typically, the active metal precursor is dissolved in an aqueous or organic solution. Then the metal-containing solution is added to a catalyst support containing the same pore volume as the volume of the solution that was added. Capillary action draws the solution into the pores. Solution added in excess of the support pore volume causes the solution transport to change from a capillary action process to a diffusion process, which is much slower. The catalyst can then be dried and calcined to drive off the volatile components within the solution, depositing the metal on the catalyst surface. The maximum loading is limited by the solubility of the precursor in the solution. The concentration profile of the impregnated compound depends on the mass transfer conditions within the pores during impregnation and drying.

At block 210, the functionalized ZTC is incorporated into electrodes. This may be performed by impregnation, suction impregnation, chemical crosslinking, or mixing followed by calcination. For example, in an embodiment, the functionalized ZTC is mixed with a calcined solid electrolyte, then the two are calcined together.

In other embodiments, an electrode can be prepared including a metal and metal oxide anode by metal sputtering. The functionalized ZTC can be introduced into the sputtering chamber. A thin metal film can be sputter-deposited first, and a second layer of metal oxide including the functionalized ZTC can be deposited over the metal film. In various embodiments, a magnetron sputtering system is used for the depositions. High purity argon and oxygen can be used as sputtering and reactive gas, respectively.

At block 212, an electrode assembly is formed. This may be performed by firing a multilayer structure comprising the anode, the solid oxide, and the cathode forming a single ceramic block. The functionalized ZTC may be incorporated into ceramic layers between the anode and the solid oxide, between the solid oxide and the cathode, or in the electrodes themselves. In some embodiments, current collectors are formed into the block with the electrodes and SO.

At block 214, an SO electrolytic cell assembly is formed. In various embodiments, this is performed by mounting the electrode assembly (EA) in a housing, which has an inlet for a steam and CO2 mixture and outlets for oxygen and a mixture of CO and H2 (syngas). In some embodiments, the housing has coils for heating, for example, by steam, waste heat from other processes, solar heat, and the like. The EA is sealed to the housing, for example, using a ceramic adhesive, followed by firing the part. This prevents gases from the hydrogen side from contacting the oxygen side. In some embodiments, a number of housing units are stacked to increase hydrogen productivity. In various embodiments, a heating system is coupled to heat source to keep the temperature of the electrolytic cell at the operating temperature.

### Examples

### Electrode preparation steps

### Synthesis of Zeolite-templated Carbon (ZTC) on the electrolyte (ionic conductors).

### Carbon Replication of CaX zeolite

CaX zeolite was prepared by ion-exchanging NaX (commercial zeolite, not ultra-large crystal) with Ca²⁺ by stirring 10 g sample in 200 mL of 0.32 M Ca(NO₃)₂ solution for 4 h. Ca²⁺ exchange can generate acid sites in zeolite which catalyze the carbon deposition inside zeolite micropores and also increases the thermal stability of zeolite template during the conditions used for the CVD.

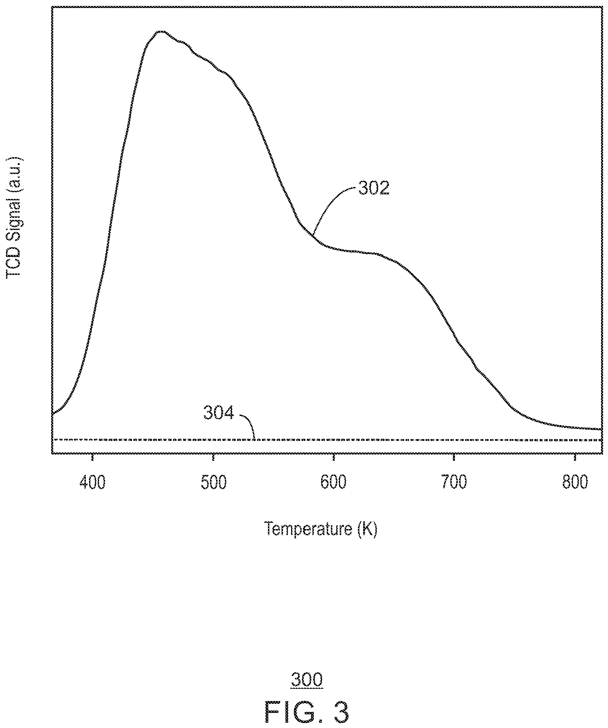

Figure 3 is a plot 300 comparing NH₃ TPD (Temperature Programmed Desorption) profiles of CaX 302 and commercial NaX 304. The plot 300 shows that the ion-exchange of an NaX zeolite with Ca²⁺ can generate acidity. This helps with the selective carbon deposition in micropores and enhances the thermal stability of zeolite template.

In the plot 300, the CaX 302 shows two desorption peaks, at 473 and 653 K, indicating the presence of two types of acid sites. In contrast, the NaX tool for does not show any desorption profile, indicating no acidity.

As shown in Table 1, the CaX zeolite also has a higher thermal stability than NaX, wherein the crystallinity does not change at temperatures up to 973 K. The thermal stability is useful, as the carbon deposition condition uses a chemical vapor deposition (CVD) at temperatures of 873 - 973 K.

**Table 1.Thermo stability ofNaX, CaX zeolites**

| Sample | A_{Z}^{[1]} | Tᵢₙᵢₜ^{[2]} (K) | T_{0.5}^{[3]} (K) |
|---|---|---|---|
| NaX | 1 | 933 | 1043 |
| CaX | 0.93 | 983 | 1153 |

| | | | |
|---|---|---|---|
| ^{[1]} Equivalent fraction of exchange cation in zeolite. ^{[2]} Temperature at which structural degradation is first observed from the X-ray powder pattern, in K. ^{[3]} Temperature at which the structure is 50 % decomposed, in K. | | | |

### Carbon Deposition in Zeolites

The carbon deposition in the X zeolites was carried out in a conventional plug-flow reactor. Typically, 1 g NaX or CaX sample was placed in plug flow reactor and the temperature was increased to a specified temperature under He flow. For example, a temperature range of about 823 K to about 973 K is suitable to selectively deposit carbon in zeolite micropores. In some embodiments using NaX and propylene the temperature is 973 K. After the temperature was allowed to stabilize for 30 min, the gas was switched to an organic precursor gas. Three different organic precursor gases were used for the carbon deposition. The organic precursor gases were propylene, ethanol, and acetylene with respective kinetic diameters of 0.45, 0.45 and 0.33 nm. These were used in mixtures, with the propylene added as a 2% propylene/He (200 mL/min·g) mixture. The ethanol was added as a helium gas flow (200 mL/min·g) that was saturated with ethanol at room temperature, using bubbler, 6 kPa. The acetylene was added as a 2 vol. % acetylene/He gas (200 mL/min·g) mixture. After flowing the organic precursor gas for the specified time, the gas was switched to He and the reactor was cooled to room temperature. The incorporation of the organic precursor gas into the zeolite resulted in a zeolite/carbon composite.

### Removing the Zeolite Template

To remove the zeolite template and format the microporous carbon, the zeolite/carbon composite was treated with a water solution of HCl and HF (3.4 wt. % HCl / 3.3 wt. % HF) at room temperature two times for 1 hour each time. This formed the microporous carbon. The resultant template-free carbon materials were filtered from the solution, washed thoroughly with deionized water and dried at 373 K overnight.

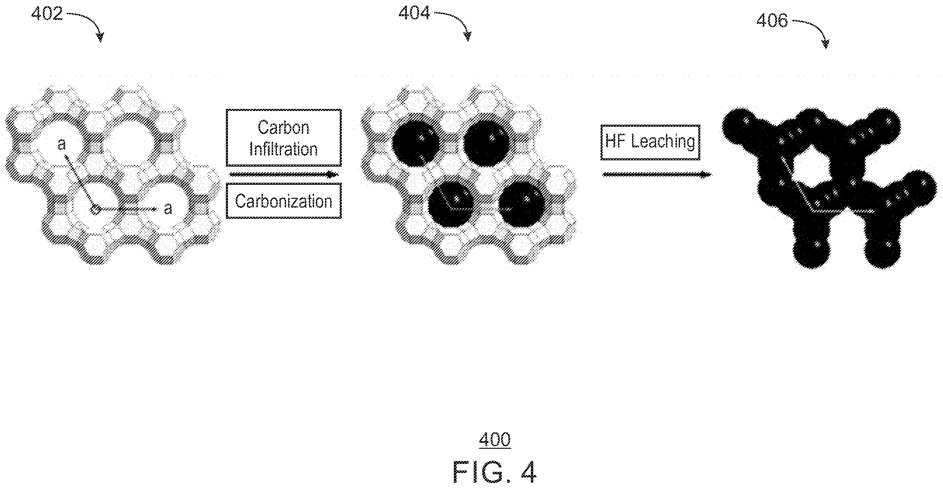

Figure 4 is a schematic diagram of the synthesis of the zeolite templated carbon (ZTC). As used herein, the ZTC may also be termed microporous carbon. The zeolite 402 may be treated, for example, with ion exchange, to form CaX. As shown in Figure 4, the zeolite 402 has carbon deposited in the pores of the zeolite through carbon infiltration and carbonization. This forms a carbon/zeolite nano composite 404. The carbon/zeolite nano composite 404 is exposed to an acidic leaching using HCl/HF to form the ZTC 406.

### Optimization of organic precursor for carbon replication of CaX

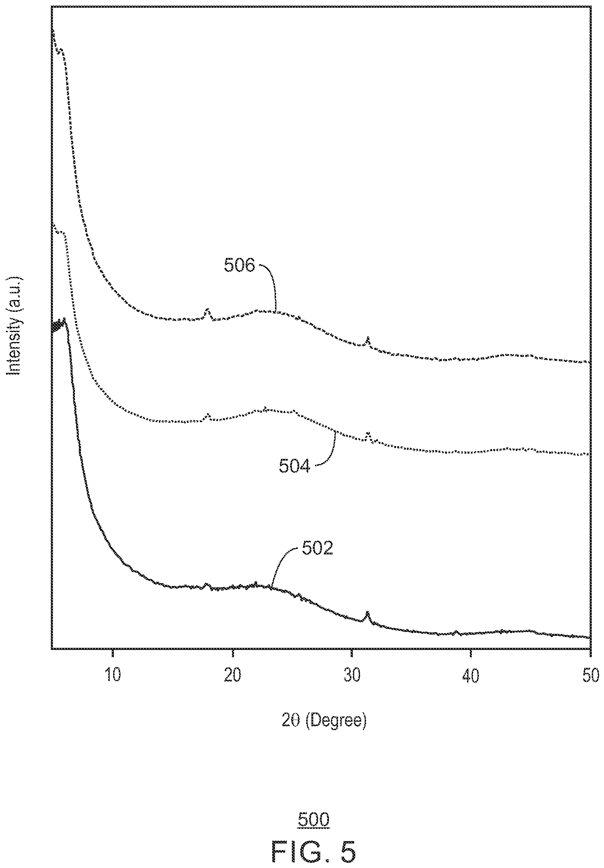

Figure 5 is an X-ray powder diffraction (XRD) plot 500 of the results for different ZTCs formed. As used herein, XRD is used for phase identification of a crystalline material and can provide information on unit cell dimensions. The material to be analyzed is finely ground, homogenized, and an average bulk composition is determined. XRD is the used to characterize the structure. To optimize the CVD conditions for carbon deposition in CaX, two different carbon precursors, propylene and ethanol, were deposited at different temperatures. In Figure 5, and the description herein, the resultant ZTCs will be designated as CaX-tttNx where CaX indicates the zeolite template, ttt indicates temperature of the CVD in kelvin (K), N represents the organic precursor gas, e.g., P for propylene, E for ethanol, or A for acetylene. The term x indicates the CVD reaction time in hours. Accordingly, CaX-973P5-C 502 is a ZTC formed using CaX as the template at a CVD deposition temperature of 973 K, using propylene as the organic precursor gas for a CVD reaction time of 5 hours. Further, if the template has been removed, this is indicated by the addition of -C at the end of the designation. Other ZTCs shown in Figure 4 include CaX-973E6-C 504 and CaX-1073E6-C 506. As described with respect to the nomenclature above, the latter two were both formed using ethanol as the organic precursor gas at a temperature of 973 K and 1073 K, respectively.

As shown in the XRD plot 500, the ZTCs formed using the CaX as a template have a broad peak around a 2θ of about 5° to about 6° which indicates presence of structural order in the arrangement of the micropores. The CaX-973P5-C 502 showed the most highly resolved peak at a 2θ of about 5° to about 6°, indicating the most faithful replication of the zeolite structure. As used herein, the reference numbers in the XRD plot 500, e.g., 502, 504, and 506, refer to the particular structures, and are used to indicate the same structures in the following plots.

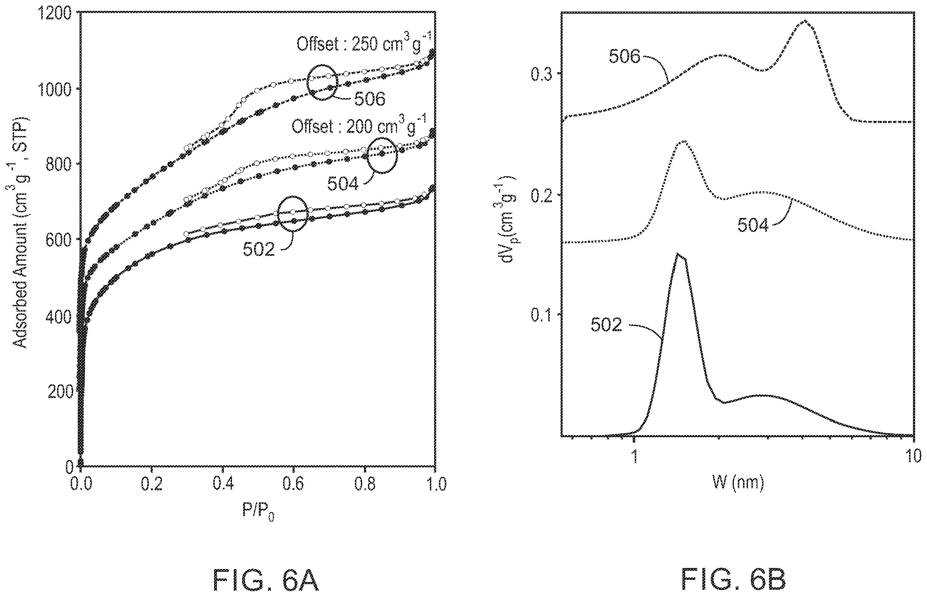

Figure 6A is a plot of N₂ adsorption/desorption isotherms for the three different ZTCs. In each of these plots, and the following plots, filled circles represent values collected during the pressure increase process, and open circles represent values during the pressure decrease process. Each group of one filled circle and one open circle represents one cycle of adsorption and desorption. Figure 6B is a plot of the pore size distribution of the ZTCs using a non-local density functional theory (NLDFT) algorithm. As known in the art, density functional theory (DFT) is a quantum mechanical modeling process used to determine structural features from quantum mechanical calculations. Like numbered plots use the same reference numbers for referring to materials as in Figure 5.

As shown in the N₂ adsorption/desorption isotherms of Figure 6A (Table 2), the carbon materials showed dual porosity, with micropores of about 1.5 nm to about 2 nm in diameter, and mesoporosity, with pores of about 2 nm to about 5 nm. Since the initial CaX contained only microporous structure, the presence of mesopores, e.g., less than about 0.40 cm³g⁻¹, indicates a poor replication of the microporous structure of the zeolite. The presence of the mesopores in the carbon replicas can be attributed to incomplete filling of the zeolite micropores with carbon.

The organic precursor may not diffuse into the zeolite micropores above a certain level of carbon filling, due to steric effects. Thus, better carbon filling, leading to higher surface area and micropore volume, may be achieved using a smaller carbon precursor such as acetylene. In Table 2, it can be noted that sample CaX-1023A2-C exhibited much higher surface area (2567 m²g⁻¹) than the samples prepared with propylene (1900 m²g⁻¹) and ethanol (1792 m²g⁻¹). Furthermore, CaX-1023A2-C showed the highest micropore volume (1.09 cm³g⁻¹).

**Table 2. BET surface area and pore volumes of carbon replicas.**

| Sample | *S*_{BET}^{[1]} (m²g⁻¹) | *V_{micro}*^{[2]} (cm³g⁻¹) | *Vₘₑₛₒ*^{[2]} (cm³g⁻¹) | *V*ₜₒₜₐₗ^{[2]} (cm³g⁻¹) |
|---|---|---|---|---|
| CaX-973P5-C | 1915 | 0.75 | 0.34 | 1.09 |
| CaX-973E6-C | 1596 | 0.58 | 0.48 | 1.06 |
| CaX-1073E6-C | 1826 | 0.65 | 0.66 | 1.31 |
| CaX-1023A2-C | 2567 | 0.95 | 0.42 | 1.37 |

| | | | | |
|---|---|---|---|---|
| ^{[1]} Brunauer-Emmett-Teller (BET) surface area. ^{[2]} Micropore volume (*V_{micro}*) calculated using *DR* equation. | | | | |

### Optimization of CVD conditions for acetylene incorporation into CaX zeolites

The results in Table 2 indicate that acetylene is most suitable for the faithful carbon replication of zeolite. This is likely due to acetylene having the smallest kinetic diameter (0.33 nm) and the highest C/H ratio. The carbon replica synthesized by CVD using acetylene at 1023 K for 2 h showed relatively high BET surface area (2567 m²g⁻¹) and large micropore volume (> 1.00 cm³g⁻¹). Such synthesis results, however, were difficult to reproduce especially when a larger amount of zeolite template (> 1 g) is used for carbon CVD. The limitations in reproducibility and scale-ups have been the main obstacles for the practical application of the zeolite-templated carbon materials.

### Properties of ZTC replicated from large crystallite CaX (LCaX)

The techniques described above were used to synthesize ZTC from CaX having a large crystallite size, for example, between about 10 µm to about 20 µm. The zeolite itself is designated as LCaX 702 in data and plots herein. The resulting structural properties are shown in Table 3. Hereinafter, the samples synthesized using the larger-crystal CaX will be denoted with a prefix of LCaX to differentiate from samples synthesized using CaX having small crystallites (about 2 µm or less). Thus, the samples will be denoted with the nomenclature of "zeolite template-CVD temperature-CVD time-heat treatment-template". For example, LCaX-873-4H-C indicates a microporous carbon sample synthesized by CVD with acetylene at 873 K for 4 h and heat treated, followed by removal of the zeolite template. LCaX-873-4H4H-C sample is similarly synthesized by repeating the cycle of 4 h acetylene CVD/heat treatment twice.

**Table 3. Pore structural properties of the carbons replicated from of larger-crystal CaX**

| Entry | Sample | *S*_{BET}^{[1]} (m²g⁻¹) | *V_{micro}*^{[2]} (cm³g⁻¹) | *Vₘₑₛₒ* (cm³g⁻¹) | *V*ₜₒₜₐₗ (cm³g⁻¹) | Ref. Nos. in plots |
|---|---|---|---|---|---|---|
| 1 | LCaX-1023-2-C^{[3]} | 2567 | 0.95 | 0.42 | 1.37 | 802^{[5]} |
| 2 | LCaX-1023-2-C ^{[4]} | 2156 | 0.83 | 0.43 | 1.26 | |
| 3 | LCaX-973-3-C ^{[3]} | 2381 | 0.93 | 0.31 | 1.24 | |
| 4 | LCaX-873-4-C ^{[3]} | 841 | 0.33 | 0.12 | 0.45 | 704^{[5]} |
| 5 | LCaX-873-4H-C ^{[3]} | 3049 | 1.12 | 0.45 | 1.57 | 706^{[5]} |
| 6 | LCaX-873-4H4H-C ^{[3]} | 2830 | 1.10 | 0.23 | 1.33 | 708^{[5]} |
| 7 | LCaX-873-4H4H-C ^{[4]} | 2840 | 1.12 | 0.21 | 1.33 | |
| 9 | LCaX-823-9H4H-C ^{[4]} | 2950 | 1.17 | 0.18 | 1.35 | |

| | | | | | | |
|---|---|---|---|---|---|---|
| ^{[1]} Brunauer-Emmett-Teller (BET) surface area. ^{[2]} Micropore volume (*V_{micro}*) calculated using *DR* equation. ^{[3]} 1 g zeolite is used for acetylene CVD. ^{[4]} 5 g zeolite is used for acetylene CVD. ^{[5]} Plots in Figures 7 are without zeolite template removal, plots in Figures 8A, 8B, and 8C are after zeolite template removal. | | | | | | |

The results in entries 1, 3 and 4 showed that higher CVD temperature is useful for obtaining higher surface area and micropore volume. The carbon synthesized at relatively low temperature (873 K, entry 4) showed significantly lower surface area than other samples, which indicates that carbon structure is not sufficiently graphitized (or rigid) at 873 K and thus collapsed after removal of zeolite template. The result also shows that only highly graphitized carbon structure can retain highly microporous structure. Unfortunately, such high-temperature acetylene CVD is very sensitive to the starting amount of zeolite template, e.g., the bed thickness in the fixed-bed reactor. If the amount of zeolite is increased from 1 to 5 g, as shown by the comparison of entries 1 and 2, for CVD using acetylene, the BET surface area and porosity of the resultant carbon decreased significantly.

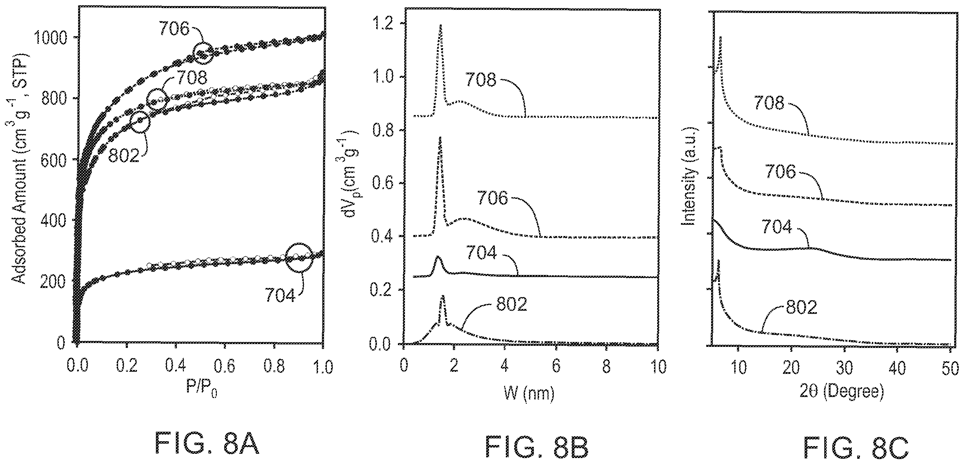

To overcome this problem, a sequential carbon synthesis procedure is described herein, which is composed of low-temperature acetylene CVD (< 873 K) and high-temperature heat treatment (1123 K) under noble gas (He). At low CVD temperature (< 873 K), carbon deposition occurs very uniformly over the zeolite bed. After the micropore of the zeolite is fully filled with non-graphitized carbon, the gas stream is switched to He and the temperature is increased to 1123 K for the graphitization (densification) of the carbon structure. Such consecutive steps allow uniform and selective deposition of high graphitized carbons inside the zeolite micropores. In result, LCaX-873-4H-C (entry 5) shows very high surface area of 3049 m² g⁻¹ and micropore volume of 1.12 cm² g⁻¹, even surpass those of sample LCaX-1023-2-C 802 (entry 1, Figures 8A-8C).

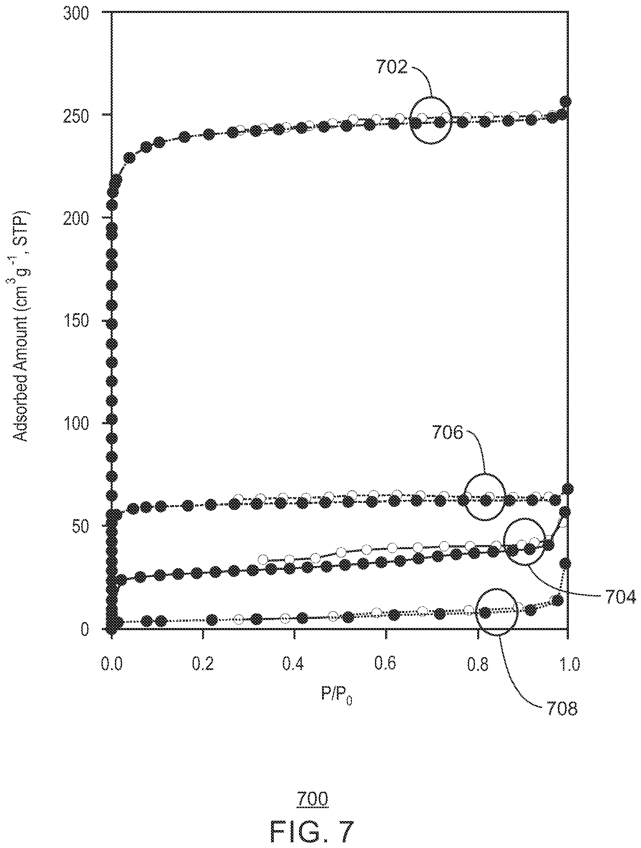

Figure 7 is a plot 700 of the N₂ adsorption-desorption isotherms of zeolite-carbon composite (without zeolite template removal) collected at the different steps of the synthesis process. All measurements are in comparison to the microporosity of the LCaX 702. After the acetylene CVD at 873 K for 4 h (LCaX-873-4 704), negligible microporosity remains inside the zeolite template. This indicates that the zeolite micropore is fully filled with the non-graphitized carbon framework. After thermal treatment at 1123 K for 4 h under He (LCaX-873-4H 706), c.a. 25% of the zeolite micropore volume is regenerated. The result reveals that the thermal treatment led to the densification and hence the volume shrinkage of carbon framework inside the zeolite micropores. Because the considerable fraction of zeolite micropores are regenerated after the thermal treatment, a secondary CVD/thermal treatment cycle using acetylene can be carried out to fill the remaining micropores. After repeating the CVD-thermal treatment cycle twice (LCaX-873-4H4H 708), the micropore of zeolite template are nearly fully filled with the graphitized carbon framework. After the removal of zeolite template, the repeated CVD/thermal treatment cycles significantly reduce the carbon mesopore volume while retaining the BET surface area: LCaX-873-4H4H-C 708 (0.23 cm³g⁻¹) showed significantly reduced mesopore volume than LCaX-873-4H 706 (0.45cm³g⁻¹), as seen by comparing entries 5 and 6 in Table 3.

The result indicates that incomplete filling of zeolite micropores leads to the formation of mesopores in the replicated carbon structure. It can be noted that the sequential carbon synthesis procedure allows high reproducibility of the carbon structure regardless of the zeolite amount (bed thickness) used for the carbon synthesis (compare entries 6 and 7).

Decreasing the initial acetylene CVD temperature from about 873 K to about 823 K, the carbon can be synthesized (entry 9) with slightly enhanced BET surface area and micropore volume. Based on these results, an optimum temperature range for initial acetylene CVD is between about 823 K to about 873 K. At CVD temperatures lower than 773 K, the carbon deposition was too slow for practical application.

Figures 8A to 8C show the N₂ adsorption isotherms and XRD patterns for the representative samples in Table 3. It is noteworthy that the most faithfully replicated carbon structure (LCaX-873-4H4H-C 708) shows a Type I isotherm with small amount of N₂ adsorption at high pressure regime (P/P₀ > 0.1). LCaX-873-4H-C 706 sample synthesized by single cycle of acetylene CVD/thermal treatment showed even higher total pore volume than the sample of LCaX-873-4H4H-C 708, but the enhancement is only due to the presence of secondary mesoporosity, as indicated by the more pronounced adsorption at P/P₀ > 0.1. The samples synthesized by subsequent acetylene CVD-heat treatment cycle, LCaX-873-4H-C 706 and LCaX-873-4H4H-C 708, showed much narrower and more intense pore size distribution in the micropore regime (W < 2 nm). It can be noted that the replicated carbon (LCaX-873-4H4H-C 708) showed a very sharp peak at 2*θ*= 6.3° in XRD. This indicates that the replicated carbon has ordered microporous structure like zeolite. Therefore, the presence of the sharp XRD peak at 2*θ* = 6.3° can be used as an indicator for evaluating the replication of zeolite structure, e.g., the efficiency of the carbon deposition.

### ZTC Functionalization.

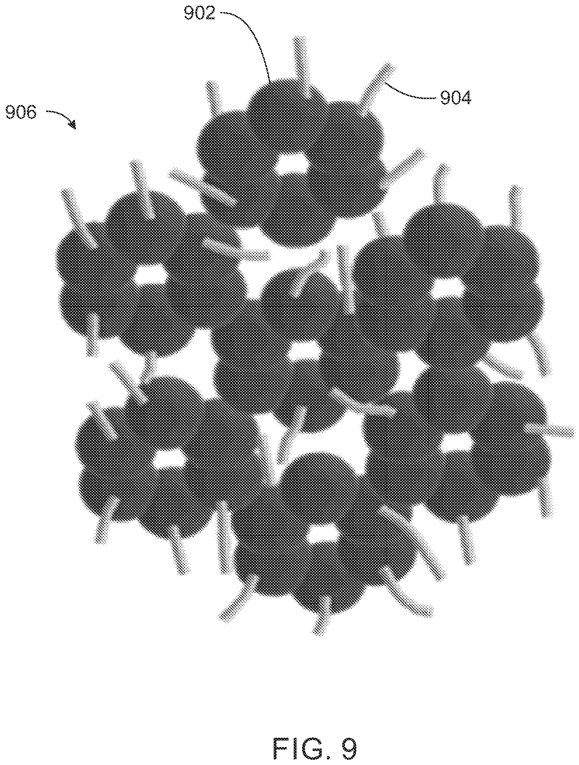

Figure 9 is a drawing of a ZTC 902 impregnated with catalyst particles 904 forming a functionalized ZTC 906. In the example described herein, wet impregnation can be used to load a noble metal, such as platinum, onto a ZTC 902 support to function as a catalyst. For example, to impregnate Pt, a solution of Pt(NH₃)(NO₃)₂ can be prepared using the desired amount. In various embodiments, the amount can range from 0.1 wt% to 5 wt%. In some embodiments, 3 wt% is used, a solution volume equivalent to the pore volume of the ZTC 902 used is added to wet the ZTC 902. The impregnated ZTC is dried in oven at 80 °C overnight. The dried Pt/ZTC is then calcined under a N₂ flow at a flow rate of 50 ml/min. This can be performed at 500 °C for 12 hours to decompose the metal nitrates. After decomposition of the metal nitrates, the Pt/ZTC can be reduced in flowing hydrogen, for example, at a flow rate of 50 ml/min for 2 hours at 500 °C, to produce dispersed Pt or catalyst particles 904 on the ZTC 902, herein termed functionalized ZTC 906.

In some embodiments, a strong electrostatic adsorption (SEA) method is used. In this method, impregnation is controlled by adjusting the pH of the carbon/water/precursor slurry to the adequate value to increase the electrostatic interactions between the metal precursor and the support.

### Incorporating functionalized ZTC into electrode

After impregnation of the catalyst particles, the functionalized ZTC is added to the electrodes. In an embodiment, the functionalized ZTC is added to the surface of the anode or the cathode, or the solid oxide electrolyte before calcination.

In various embodiments, a calcinated YSZ powder, or other solid oxide electrolyte, is wet milled in a suitable solvent, such as propanol, for a period of time, such as 2 to 3 hours. The functionalized ZTC is then mixed with the milled YSZ, and calcined in a two-step process. A first calcination is carried out at about 900 °C to about 1000 °C for about 12 hours, followed by wet milling, and then a second calcination at about 1000 °C to about 1100 °C for about 10 hours.

In some embodiments, the electrode is impregnated with the functionalized ZTC by sputtering. For example, the functionalized ZTC can be introduced into the gas in a sputtering chamber.

### Electrode assembly (EA) preparation

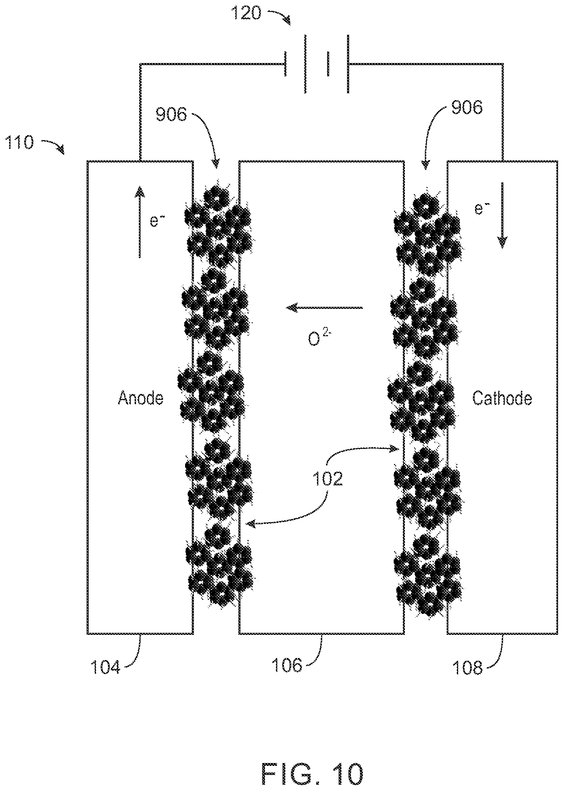

Figure 10 is a schematic drawing of an EA 110 with the functionalized ZTC incorporated into the interfaces between the SO and the anode and the cathode. Like numbered items are as described with respect to Figure 1. In some embodiments, the individual layers are formed, assembled into a stack, and then fired to form the final EA.

### SO Electrolytic Cell Assembly

The final SOEC assembly 100, shown in Figure 1, is made by mounting the EA 110 (Figures 1 and 9) into a housing 112.

As described herein, in various embodiments, heating systems 128 in the EA 110 are coupled to heat sources. These are used to add heat to the EA 110 to keep the temperature in the operating temperature range during electrolysis. In some embodiments, the water is provided as steam 120, which provides sufficient heat to the SO electrolytic cell for operations. In these embodiment, the heating system may not be present, or may only be used for startup.

### Embodiments

An embodiment described herein provides a method for making a solid oxide electrolytic cell assembly (SOEC). The SOEC includes forming a functionalized zeolite templated carbon (ZTC). The functionalized ZTC is formed by forming a CaX zeolite, depositing carbon in the CaX zeolite using a chemical vapor deposition (CVD) process to form a carbon/zeolite composite, treating the carbon/zeolite composite with a solution including hydrofluoric acid to form a ZTC, and treating the ZTC to add catalyst sites. In the method, the functionalized ZTC is incorporated into electrodes by forming a mixture of the functionalized ZTC with a calcined solid oxide electrolyte, and calcining the mixture. The method includes forming an electrode assembly, forming the SO electrolytic cell assembly, and coupling the SO electrolytic cell assembly to a heat source.

In an aspect, the CaX zeolite is formed by ion exchanging a NaX zeolite with calcium ions. In an aspect, the CVD process uses propylene, ethanol, or acetylene, or any combinations thereof, as an organic precursor gas. In an aspect, the CVD process uses acetylene as an organic precursor gas. In an aspect, the acetylene is added as a 2 vol. % solution in helium. In an aspect, the CVD process is performed at a temperature of between 823 K and 1123 K.

In an aspect, the CVD process includes depositing carbon in a matrix of the CaX zeolite at a first temperature using a gas stream including acetylene, switching the gas stream to a helium stream, and increasing the temperature to a second temperature. In an aspect, the first temperature is less than 875 K. In an aspect, the first temperature is about 823 K. In an aspect, the second temperature is greater than 1120 K. In an aspect, the second temperature is about 1123 K.

In an aspect, the CVD process is repeated by cooling back to the first temperature, switching the gas stream back to the gas stream including acetylene, depositing carbon in the matrix of the CaX zeolite at the first temperature, switching the gas stream to the helium stream, and increasing the temperature to the second temperature. In an aspect, forming the functionalized ZTC using an incipient wetness technique.

In an aspect, the method includes dissolving an active metal precursor to form an aqueous solution, adding an amount of the aqueous solution to the ZTC corresponding to a pore volume of the ZTC forming a metal/ZTC composite, drying the metal/ZTC composite, and sintering the metal/ZTC composite to form the functionalized ZTC. In an aspect, the method includes incorporating the functionalized ZTC onto an anode, a cathode, or both by sputtering.

In an aspect, the method includes forming the electrode assembly by firing the anode with the incorporated functionalized ZTC to form a ceramic anode, firing the solid oxide electrolyte (SOE) to form a ceramic SOE, firing the cathode with the incorporated functionalized ZTC to form a ceramic cathode, assembling the ceramic anode, ceramic SOE, and ceramic cathode into an assembly, and firing the assembly to form an electrode assembly.

Another embodiment provides a solid oxide electrolysis cell (SOEC). The SOEC includes an electrode assembly (EA). The EA includes an anode, a solid oxide electrolyte, and a cathode, wherein the anode, the cathode, or both includes functionalized zeolite templated carbon (ZTC). The SOEC includes a housing that includes an inlet for a mixture of steam and carbon dioxide, an outlet for a mixture of hydrogen and carbon monoxide, an outlet for oxygen, and a heating system to provide heat to the SOEC. The SOEC includes a power line coupled to the cathode to provide current to the SO electrolytic cell from an external power supply and a return line from the anode coupled to the external power supply.

In an aspect, the SOEC includes a layer of functionalized zeolite template carbon disposed at the interface between the anode and the SO, the interface between the cathode and the SO, or both. In an aspect, the solid oxide electrolyte includes yttria-stabilized zirconia (YSZ).

Other implementations are also within the scope of the following claims.

## Claims

1. A method (200) for making a solid oxide electrolytic cell assembly(110), comprising:
forming a functionalized zeolite templated carbon, comprising
forming a CaX zeolite,
depositing (204) carbon in the CaX zeolite (402) using a chemical vapor deposition process to form a carbon/zeolite composite (404),
treating (206) the carbon/zeolite composite (404) with a solution comprising hydrofluoric acid to form a zeolite templated carbon (406), and
treating (208) the zeolite templated carbon to add catalyst sites, forming the functionalized zeolite templated carbon;
incorporating (210) the functionalized zeolite templated carbon (406) into electrodes, comprising
forming a mixture of the functionalized zeolite templated carbon with a calcined solid oxide electrolyte, and
calcining the mixture;
forming (212) an electrode assembly;
forming (214) the solid oxide electrolytic cell assembly; and
coupling the solid oxide electrolytic cell assembly to a heat source.

2. The method of claim 1, wherein the CaX zeolite (402) is formed by ion exchanging a NaX zeolite with calcium ions.

3. The method of claim 1 or 2, wherein the chemical vapor deposition process uses propylene, ethanol, or acetylene, or any combinations thereof, as an organic precursor gas.

4. The method of claim 1 or 2, wherein the chemical vapor deposition process uses acetylene as an organic precursor gas, wherein the acetylene is added as a 2 vol. % solution in helium.

5. The method of claim 1, wherein the chemical vapor deposition process is performed at a temperature of between 823 K and 1123 K.

6. The method of claim 1, wherein the chemical vapor deposition process comprises:
depositing carbon in a matrix of the CaX zeolite at a first temperature using a gas stream comprising acetylene;
switching the gas stream to a helium stream; and
increasing the temperature to a second temperature.

7. The method of claim 6, wherein the first temperature is less than 875 K, optionally, wherein the first temperature is 823 K.

8. The method of claim 6, wherein the second temperature is greater than 1120 K, optionally, wherein the second temperature is 1123 K.

9. The method of claim 6, comprising repeating the chemical vapor deposition process by:
cooling back to the first temperature;
switching the gas stream back to the gas stream comprising acetylene;
depositing carbon in the matrix of the CaX zeolite at the first temperature;
switching the gas stream to the helium stream; and
increasing the temperature to the second temperature.

10. The method of any preceding claim, comprising forming the functionalized zeolite templated carbon using an incipient wetness technique.

11. The method of any preceding claim, comprising:
dissolving an active metal precursor to form an aqueous solution;
adding an amount of the aqueous solution to the zeolite templated carbon corresponding to a pore volume of the zeolite templated carbon forming a metal/zeolite templated carbon composite;
drying the metal/ zeolite templated carbon composite; and
sintering the metal/ zeolite templated carbon composite to form the functionalized zeolite templated carbon.

12. The method of any preceding claim, comprising incorporating the functionalized zeolite templated carbon onto an anode (104), a cathode (108), or both by sputtering.

13. The method of claim 12, comprising forming the electrode assembly by:
firing the anode (104) with the incorporated functionalized zeolite templated carbon to form a ceramic anode;
firing the solid oxide electrolyte (106) to form a ceramic solid oxide electrolyte;
firing the cathode (108) with the incorporated functionalized zeolite templated carbon to form a ceramic cathode;
assembling the ceramic anode, ceramic solid oxide electrolyte, and ceramic cathode into an assembly; and
firing the assembly to form the electrode assembly (110).

14. A solid oxide electrolysis cell (100) comprising:
an electrode assembly (110), comprising
an anode (104),
a solid oxide electrolyte (106), and
a cathode (108), wherein the anode, the cathode, or both comprises functionalized zeolite templated carbon;
a housing (112) comprising
an inlet for a mixture of steam (120) and carbon dioxide (118);
an outlet for a mixture of hydrogen (122) and carbon monoxide (124);
an outlet for oxygen (114); and
a heating system to provide heat to the solid oxide electrolysis cell;
a power line coupled to the cathode to provide current to the solid oxide electrolytic cell from an external power supply (126); and
a return line from the anode coupled to the external power supply.

15. The solid oxide electrolysis cell of claim 14, comprising a layer of functionalized zeolite template carbon disposed at the interface (102) between the anode (104) and the solid oxide electrolyte (106), the interface (102) between the cathode (108) and the solid oxide electrolyte (106), or both.

16. The solid oxide electrolysis cell of claim 14 or 15, wherein the solid oxide electrolyte (106) comprises yttria-stabilized zirconia.

## Patentansprüche

1. Verfahren (200) zur Herstellung einer Festoxid-Elektrolysezellenanordnung (110), umfassend:
Ausbilden eines funktionalisierten zeolithtemplatierten Kohlenstoffs, umfassend:
Ausbilden eines CaX-Zeolithen,
Abscheiden (204) von Kohlenstoff in dem CaX-Zeolithen (402) unter Nutzung eines chemischen Gasphasenabscheidungsprozesses, um einen Kohlenstoff/Zeolith-Verbundstoff (404) auszubilden,
Behandeln (206) des Kohlenstoff/Zeolith-Verbundstoffs (404) mit einer Lösung, die Flusssäure umfasst, um einen zeolithtemplatierten Kohlenstoff (406) auszubilden, und Behandeln (208) des zeolithtemplatieren Kohlenstoffs, um Katalysatorstellen hinzuzufügen und dadurch den funktionalisierten zeolithtemplatierten Kohlenstoff auszubilden;
Integrieren (210) des funktionalisierten zeolithtemplatierten Kohlenstoffs (406) in Elektroden, umfassend:
Ausbilden eines Gemischs des funktionalisierten zeolithtemplatierten Kohlenstoffs mit einem kalzinierten Festoxid-Elektrolyten und
Kalzinieren des Gemischs;
Ausbilden (212) einer Elektrodenanordnung;
Ausbilden (214) der Festoxid-Elektrolysezellenanordnung; und
Koppeln der Festoxid-Elektrolysezellenanordnung mit einer Wärmequelle.

2. Verfahren nach Anspruch 1, wobei der CaX-Zeolith (402) durch Ionenaustausch eines NaX-Zeolithen mit Calciumionen ausgebildet wird.

3. Verfahren nach Anspruch 1 oder 2, wobei der chemische Gasphasenabscheidungsprozess Propylen, Ethanol oder Acetylen oder beliebige Kombinationen davon als organisches Vorläufergas nutzt.

4. Verfahren nach Anspruch 1 oder 2, wobei der chemische Gasphasenabscheidungsprozess Acetylen als organisches Vorläufergas nutzt, wobei das Acetylen als 2-volumenprozentige Lösung in Helium zugegeben wird.

5. Verfahren nach Anspruch 1, wobei der chemische Gasphasenabscheidungsprozess bei einer Temperatur zwischen 823 K und 1123 K durchgeführt wird.

6. Verfahren nach Anspruch 1, wobei der chemische Gasphasenabscheidungsprozess Folgendes umfasst:
Abscheiden von Kohlenstoff in einer Matrix aus dem CaX-Zeolithen bei einer ersten Temperatur unter Nutzung eines Gasstroms, der Acetylen umfasst;
Umschalten des Gasstroms auf einen Heliumstrom; und Erhöhen der Temperatur auf eine zweite Temperatur.

7. Verfahren nach Anspruch 6, wobei die erste Temperatur niedriger als 875 K ist, wobei optional die erste Temperatur 823 K beträgt.

8. Verfahren nach Anspruch 6, wobei die zweite Temperatur höher als 1120 K ist, wobei optional die zweite Temperatur 1123 K beträgt.

9. Verfahren nach Anspruch 6, das ein Wiederholen des chemischen Gasphasenabscheidungsprozesses durch Folgendes umfasst:
Rückkühlen auf die erste Temperatur;
Zurückschalten des Gasstroms auf den Gasstrom, der Acetylen umfasst;
Abscheiden von Kohlenstoff in der Matrix aus dem CaX-Zeolithen bei der ersten Temperatur;
Umschalten des Gasstroms auf den Heliumstrom; und
Erhöhen der Temperatur auf die zweite Temperatur.

10. Verfahren nach einem vorangehenden Anspruch, das ein Ausbilden des funktionalisierten zeolithtemplatierten Kohlenstoffs unter Nutzung einer Trockenimprägnierungstechnik umfasst.

11. Verfahren nach einem vorangehenden Anspruch, umfassend:
Lösen eines aktiven Metallvorläufers, um eine wässrige Lösung auszubilden;
Zugeben einer Menge der wässrigen Lösung zu dem zeolithtemplatierten Kohlenstoff entsprechend einem Porenvolumen des zeolithtemplatierten Kohlenstoffs und dadurch Ausbilden eines Verbundstoffs aus Metall und zeolithtemplatiertem Kohlenstoff;
Trocknen des Verbundstoffs aus Metall und zeolithtemplatiertem Kohlenstoff; und
Sintern des Verbundstoffs aus Metall und zeolithtemplatiertem Kohlenstoff, um den funktionalisierten zeolithtemplatierten Kohlenstoff auszubilden.

12. Verfahren nach einem vorangehenden Anspruch, das ein Integrieren des funktionalisierten zeolithtemplatierten Kohlenstoffs auf eine Anode (104), eine Kathode (108) oder beide durch Sputtern umfasst.

13. Verfahren nach Anspruch 12, das ein Ausbilden der Elektrodenanordnung durch Folgendes umfasst:
Brennen der Anode (104) mit dem integrierten funktionalisierten zeolithtemplatierten Kohlenstoff, um eine keramische Anode auszubilden;
Brennen des Festoxid-Elektrolyten (106), um einen keramischen Festoxid-Elektrolyten auszubilden;
Brennen der Kathode (108) mit dem integrierten funktionalisierten zeolithtemplatierten Kohlenstoff, um eine keramische Kathode auszubilden;
Zusammenfügen der keramischen Anode, des keramischen Festoxid-Elektrolyten und der keramischen Kathode zu einer Anordnung; und
Brennen der Anordnung, um die Elektrodenanordnung (110) auszubilden.

14. Festoxid-Elektrolysezelle (100), umfassend:
eine Elektrodenanordnung (110), umfassend:
eine Anode (104),
einen Festoxid-Elektrolyten (106) und
eine Kathode (108), wobei die Anode, die Kathode oder beide funktionalisierten zeolithtemplatierten Kohlenstoff umfasst/umfassen;
ein Gehäuse (112), umfassend:
einen Einlass für ein Gemisch aus Dampf (120) und Kohlendioxid (118);
einen Auslass für ein Gemisch aus Wasserstoff (122) und Kohlenmonoxid (124);
einen Auslass für Sauerstoff (114); und
ein Heizsystem zum Bereitstellen von Wärme für die Festoxid-Elektrolysezelle;
eine Stromleitung, die mit der Kathode gekoppelt ist, um der Festoxid-Elektrolysezelle Strom von einer externen Stromversorgung (126) bereitzustellen; und
eine Rückleitung von der Anode, die mit der externen Stromversorgung gekoppelt ist.

15. Festoxid-Elektrolysezelle nach Anspruch 14, die eine Schicht aus funktionalisiertem zeolithtemplatierten Kohlenstoff umfasst, die an der Grenzfläche (102) zwischen der Anode (104) und dem Festoxid-Elektrolyten (106), der Grenzfläche (102) zwischen der Kathode (108) und dem Festoxid-Elektrolyten (106) oder beiden angeordnet ist.

16. Festoxid-Elektrolysezelle nach Anspruch 14 oder 15, wobei der Festoxid-Elektrolyt (106) mit Yttriumoxid stabilisiertes Zirconiumdioxid umfasst.

## Revendications

1. Procédé (200) de fabrication d'un ensemble cellule électrolytique à oxyde solide (110), comprenant :
la formation de carbone en matrice zéolithique fonctionnalisée, ce qui comprend
la formation d'une zéolithe CaX,
le dépôt (204) de carbone dans la zéolithe CaX (402) au moyen d'un processus de dépôt chimique en phase vapeur pour former un composite carbone/zéolithe (404),
le traitement (206) du composite carbone/zéolithe (404) avec une solution comprenant de l'acide fluorhydrique pour former du carbone en matrice zéolithique (406), et le traitement (208) du carbone en matrice zéolithique pour ajouter des sites catalytiques, ce qui forme le carbone en matrice zéolithique fonctionnalisée ;
l'incorporation (210) du carbone en matrice zéolithique fonctionnalisée (406) dans des électrodes, ce qui comprend
la formation d'un mélange du carbone en matrice zéolithique fonctionnalisée avec un électrolyte en oxyde solide calciné, et
la calcination du mélange ;
la formation (212) d'un ensemble électrode ;
la formation (214) de l'ensemble cellule électrolytique à oxyde solide ; et
le couplage de l'ensemble cellule électrolytique à oxyde solide à une source de chaleur.

2. Procédé selon la revendication 1, dans lequel la zéolithe CaX (402) est formée par échange d'ions d'une zéolithe NaX avec des ions calcium.

3. Procédé selon la revendication 1 ou 2, dans lequel le processus de dépôt chimique en phase vapeur utilise du propylène, de l'éthanol ou de l'acétylène, ou n'importe quelle combinaison de ceux-ci, comme gaz précurseur organique.

4. Procédé selon la revendication 1 ou 2, dans lequel le processus de dépôt chimique en phase vapeur utilise de l'acétylène comme gaz précurseur organique, l'acétylène étant ajouté sous la forme d'une solution à 2 % en volume dans de l'hélium.

5. Procédé selon la revendication 1, dans lequel le processus de dépôt chimique en phase vapeur est effectué à une température comprise entre 823 K et 1123 K.

6. Procédé selon la revendication 1, dans lequel le processus de dépôt chimique en phase vapeur comprend :
le dépôt de carbone dans une matrice de la zéolithe CaX à une première température au moyen d'un courant gazeux comprenant de l'acétylène ;
le basculement du courant gazeux vers un courant d'hélium ; et
l'augmentation de la température jusqu'à une deuxième température.

7. Procédé selon la revendication 6, dans lequel la première température est inférieure à 875 K, éventuellement dans lequel la première température est de 823 K.

8. Procédé selon la revendication 6, dans lequel la deuxième température est supérieure à 1120 K, éventuellement dans lequel la deuxième température est de 1123 K.

9. Procédé selon la revendication 6, comprenant la répétition du processus de dépôt chimique en phase vapeur par :
refroidissement jusqu'à la première température ;
rebasculement du courant gazeux vers le courant gazeux comprenant de l'acétylène ;
dépôt de carbone dans la matrice de la zéolithe CaX à la première température ;
basculement du courant gazeux vers le courant d'hélium ; et
augmentation de la température jusqu'à la deuxième température.

10. Procédé selon une quelconque revendication précédente, comprenant la formation du carbone en matrice zéolithique fonctionnalisée au moyen d'une technique d'imprégnation à humidité naissante.

11. Procédé selon une quelconque revendication précédente, comprenant :
la dissolution d'un précurseur de métal actif pour former une solution aqueuse ;
l'ajout au carbone en matrice zéolithique d'une quantité de la solution aqueuse correspondant à un volume de pores du carbone en matrice zéolithique, ce qui forme un composite métal/carbone en matrice zéolithique ;
le séchage du composite métal/carbone en matrice zéolithique ; et
le frittage du composite métal/carbone en matrice zéolithique pour former le carbone en matrice zéolithique fonctionnalisée.

12. Procédé selon une quelconque revendication précédente, comprenant l'incorporation du carbone en matrice zéolithique fonctionnalisée sur une anode (104), une cathode (108) ou les deux par pulvérisation cathodique.

13. Procédé selon la revendication 12, comprenant la formation de l'ensemble électrode par :
cuisson de l'anode (104) avec le carbone en matrice zéolithique fonctionnalisée incorporé pour former une anode céramique ;
cuisson de l'électrolyte en oxyde solide (106) pour former un électrolyte en oxyde solide céramique ;
cuisson de la cathode (108) avec le carbone en matrice zéolithique fonctionnalisée incorporé pour former une cathode céramique ;
assemblage de l'anode céramique, de l'électrolyte en oxyde solide céramique et de la cathode céramique en un ensemble ; et
cuisson de l'ensemble pour former l'ensemble électrode (110) .

14. Cellule d'électrolyse à oxyde solide (100) comprenant :
un ensemble électrode (110), comprenant une anode (104),
un électrolyte en oxyde solide (106), et
une cathode (108), l'anode, la cathode ou les deux comprenant du carbone en matrice zéolithique fonctionnalisée ;
un boîtier (112) comprenant
une entrée pour un mélange de vapeur d'eau (120) et de dioxyde de carbone (118) ;
une sortie pour un mélange d'hydrogène (122) et de monoxyde de carbone (124) ;
une sortie pour de l'oxygène (114) ; et
un système de chauffage pour apporter de la chaleur à la cellule d'électrolyse à oxyde solide ;
une ligne d'alimentation couplée à la cathode pour fournir du courant à la cellule électrolytique à oxyde solide depuis une source d'alimentation externe (126) ; et
une ligne de retour partant de l'anode couplée à la source d'alimentation externe.

15. Cellule d'électrolyse à oxyde solide selon la revendication 14, comprenant une couche de carbone en matrice zéolithique fonctionnalisée disposée à l'interface (102) entre l'anode (104) et l'électrolyte en oxyde solide (106), l'interface (102) entre la cathode (108) et l'électrolyte en oxyde solide (106), ou les deux.

16. Cellule d'électrolyse à oxyde solide selon la revendication 14 ou 15, dans laquelle l'électrolyte en oxyde solide (106) comprend de la zircone stabilisée à l'oxyde d'yttrium.
